# EUROPEAN PATENT APPLICATION

(11) **EP 4 841 744 A1**
(43) Date of publication of application: **18.11.2026**
(21) Application number: 26177985.4
(22) Date of filing: 11.05.2026
(51) Int. Cl.: H01M 10/0587, H01M 50/533, H01M 50/534, H01M 50/538

(54) **ELECTRODE SHEET, BATTERY INCLUDING THE SAME, AND ELECTRONIC DEVICE**

(30) Priority: 13.05.2025 CN 202510612846
(71) Applicant: AESC Japan Ltd., Yokohama-shi, Kanagawa 220-0012 (JP)
(72) Inventor: GONG, Zhijie, Jiangyin City, Wuxi City, 214443 (CN); LIU, Feiyang, Jiangyin City, Wuxi City, 214443 (CN); JIANG, Zhida, Jiangyin City, Wuxi City, 214443 (CN); HU, Fei, Jiangyin City, Wuxi City, 214443 (CN)
(74) Representative: Becker, Eberhard

(57) **Abstract**

An electrode sheet (100), a battery including the same, and an electronic device are provided. The electrode sheet (100) includes a current collector (110), an active material layer (120), and a reinforcing layer (130). At least one surface of the current collector (110) includes an active material layer coated region (101) and an active material layer uncoated region (102) adjacent to each other in a first direction (Y). The active material layer (120) is coated on the active material layer coated region (101). The reinforcing layer (130) is coated on at least a portion of the active material layer uncoated region (102). In the first direction (Y), a width of the active material layer uncoated region (102) is W1 mm, and a width of the reinforcing layer (130) is W2 mm, satisfying 2.5≤W1/W2≤7.5.

## Description

### BACKGROUND

### Technical Field

The disclosure relates to the technical field of secondary batteries, and specifically relates to an electrode sheet, a battery including the same, and an electronic device.

### Description of Related Art

**In** recent years, with the rapid development of mobile electronic apparatuses and the vigorous rise of new energy vehicles, the market has placed increasing demands on the energy density, cycle life, and fast-charging performance of lithium-ion batteries. Among the various materials that make up lithium-ion batteries, aluminum foil and copper foil are widely used as current collectors for the positive and negative electrodes. Aluminum foil and copper foil have relatively thin thicknesses, and the bending stiffness of the foil materials themselves is low. After die-cutting, the tabs are prone to bending, wrinkling, and folding due to effects such as gravity, vibration, and winding centrifugal force. Since the thickness of copper foil is generally thinner than that of aluminum foil, problems such as tab bending and wrinkling tend to be significantly aggravated, so that production consistency of the stacking and core-winding processes may be affected, and the charge-discharge performance and safety performance of the finished cell products may further be affected.

### SUMMARY

The disclosure provides an electrode sheet, a battery including the same, and an electronic device capable of providing an improved supporting effect through a reinforcing layer and capable of providing improved safety performance of the battery with reduced wrinkles, folding, etc. in an active material layer uncoated region.

To solve the above technical problems, the disclosure is achieved through the following technical solutions.

The disclosure provides an electrode sheet including a current collector, an active material layer, and a reinforcing layer.

At least one surface of the current collector includes an active material layer coated region and an active material layer uncoated region adjacent to each other in a first direction.

The active material layer is coated on the active material layer coated region. The reinforcing layer is coated on at least a portion of the active material layer uncoated region. In the first direction, a width of the active material layer uncoated region is W1 mm, and a width of the reinforcing layer is W2 mm, satisfying 2.5≤W1/W2≤7.5.

In an embodiment of the disclosure, in the first direction, a predetermined gap G mm is provided between the active material layer and the reinforcing layer, satisfying 22≤W1/G≤400.

In an embodiment of the disclosure, the predetermined gap is 0.1 mm to 1.1 mm.

In an embodiment of the disclosure, in the first direction, a width of the active material layer is W3 mm, satisfying 3≤W3/W1≤11.

In an embodiment of the disclosure, a ratio of a thickness of the reinforcing layer to a thickness of the current collector is 1 to 6, or
the thickness of the current collector is 4 µm to 5.5 µm.

In an embodiment of the disclosure, a grayscale value of the reinforcing layer is 0 to 110.

In an embodiment of the disclosure, the electrode sheet further includes a tab and a portion of the active material layer partially covers at least a portion of a surface of the tab in the first direction. Alternatively, a transition region is provided between the tab and the active material layer coated region, and the reinforcing layer is located on a portion of the transition region and a portion of the surface of the tab.

In an embodiment of the disclosure, the tab further includes a plurality of reinforcing ribs, and the reinforcing ribs are formed by stamping the tab and are set in at least one of dot-shaped, strip-shaped, wave-shaped, or zigzag-shaped. A ratio of a width of a maximum overlapping position of the reinforcing ribs and the reinforcing layer to the width of the reinforcing layer is 0.1 to 1.

In an embodiment of the disclosure, the current collector is arranged on two surfaces of the active material layer, and the electrode sheet is a negative electrode sheet.

The disclosure further provides a battery includes a housing, an electrode assembly, and a lid assembly.

The housing has an upper opening.

The electrode assembly is placed into the housing through the upper opening.

The lid assembly closes the upper opening.

The electrode assembly is formed by winding or stacking after laminating a positive electrode sheet, a separator, and a negative electrode sheet, and the negative electrode sheet adopts the electrode sheet according to the above. In the first direction, the electrode assembly includes a base and an active material layer uncoated region. The active material layer uncoated region includes a bent portion and a connecting portion fixedly connected to the lid assembly, and the bent portion is connected between the base and the connecting portion. The reinforcing layer covers the bent portion.

In an embodiment of the disclosure, the battery further includes an adhesive tape including a first adhesive region, a second adhesive region, and a non-adhesive region located between the first adhesive region and the second adhesive region. The non-adhesive region covers the reinforcing layer, the first adhesive region covers the base, and the second adhesive region covers the connecting portion.

The disclosure further provides an electronic device including the aforementioned battery.
To sum up, in the electrode sheet, the battery including the same, and the electronic device provided by the disclosure, the reinforcing layer is enabled to provide an improved supporting effect when the width of the active material layer uncoated region is large, so that wrinkles, folds, etc. in the active material layer uncoated region are avoided, and the reinforcing layer is prevented from occupying the welding region of the active material layer uncoated region due to an excessively large width of the reinforcing layer. In this way, the size of the welding region of the active material layer uncoated region is ensured, and the safety performance of the battery is improved. Further, when the electrode sheet is assembled into a battery, since the active material layer uncoated region undergoes bending, the problem of insertion is avoided, and related failures such as short circuits are prevented.

### BRIEF DESCRIPTION OF THE DRAWINGS

To make the technical solutions provided in the embodiments of the disclosure more clearly illustrated, several accompanying drawings required by the embodiments for description are briefly introduced as follows. Obviously, the drawings in the following description are merely several embodiments of the disclosure, and for a person having ordinary skill in the art, other drawings can be obtained based on these drawings without inventive effort.
FIG. 1 is a schematic view of an electrode sheet according to an embodiment.
FIG. 2 is a cross-sectional view of the electrode sheet taken in A-A direction of FIG. 1.
FIG. 3 is a schematic view of a tab on the electrode sheet according to an embodiment.
FIG. 4 is a schematic view of the tab and reinforcing ribs on the electrode sheet according to an embodiment.
FIG. 5 is a schematic view of the tab on the electrode sheet according to another embodiment.
FIG. 6 is a schematic view of the tab and the reinforcing ribs on the electrode sheet according to another embodiment.
FIG. 7 is a schematic view of a battery according to an embodiment.
FIG. 8 is a schematic view of an electrode assembly according to an embodiment.
FIG. 9 is a schematic view of the electrode assembly according to another embodiment.
FIG. 10 is a schematic view of a positive electrode sheet according to an embodiment.
FIG. 11 is a schematic view of a positive tab on the positive electrode sheet according to an embodiment.
FIG. 12 is a schematic view of the positive tab on the positive electrode sheet according to another embodiment.
FIG. 13 is a schematic view of a portion of the electrode assembly according to an embodiment.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

It should be understood that the structures, scales, sizes, etc. shown in the accompanying drawings in the specification are only to be used together with the content disclosed in the specification for a person having ordinary skill in the art to comprehend and read, are not intended to define the defining conditions of the implementation of the disclosure, and therefore have no technical significance. Any structural modification, proportional relationship change, or size adjustment, without affecting the effects and objectives that can be achieved by the disclosure, should still fall within the scope of the technical content disclosed in the disclosure. Further, terms such as "upper", "lower", "left", "right", "middle", "below", "under", "first", "second", and "one" quoted in this specification are only for the convenience of description and are not used to limit the applicable scope of the disclosure. The change or adjustment of its relative relationship should also be regarded as the applicable scope of the disclosure without substantive change of the technical content.

The technical solution of the disclosure is further detailed in combination with the embodiments in the following paragraphs. Obviously, the described embodiments are only part of the embodiments of the disclosure, not all embodiments. Based on the embodiments of the disclosure, all other embodiments obtained by a person having ordinary skill in the art without making any inventive effort fall within the scope that the disclosure seeks to protect.

As requirements for battery energy density or fast charging increase, in order to match large-capacity cells, multi-layer tabs are required. When multi-layer tabs and connecting sheets are laser welded, because there are multiple layers of tabs, the outer tabs need to be bent, so that the transmission path is lengthened, which causes the width of the active material layer uncoated region on the current collector to increase. In addition, in order to improve energy density, the current collector will become increasingly thinner, and an ultra-thin current collector is prone to wrinkling. To this end, by arranging a reinforcing layer on the active material layer uncoated region of the current collector, wrinkling of the current collector may be reduced, so that the safety performance of the battery is improved while ensuring that the battery meets requirements such as energy density and fast charging.

The disclosure provides an electronic device including at least one battery, and the battery is used to provide electrical energy. Herein, the electrical device may be a vehicle, a mobile phone, a portable device, a notebook computer, a ship, a spacecraft, an electric toy, an electric tool, etc. In an embodiment of the disclosure, the vehicle may be, for example, a new energy vehicle, and the new energy vehicle may be a pure electric vehicle, a hybrid vehicle, or a range-extended vehicle, etc. The spacecraft includes an airplane, a rocket, a space shuttle, a spaceship, etc. The electric toy includes a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, including, for example, an electric drill, an electric grinder, an electric wrench, an electric screwdriver, an electric hammer, an impact drill, a concrete vibrator, an electric planer, etc.

The disclosure further provides a battery, which may be used in the above-mentioned electronic device, and the battery includes an electrode sheet. In an embodiment, the electrode sheet includes a current collector, and at least one surface of the current collector includes an active material layer coated region and an active material layer uncoated region adjacent to each other in a first direction. An active material layer is coated on the active material layer coated region. A reinforcing layer is coated on at least a portion of the active material layer uncoated region. The electrode sheet is, for example, a negative electrode sheet.

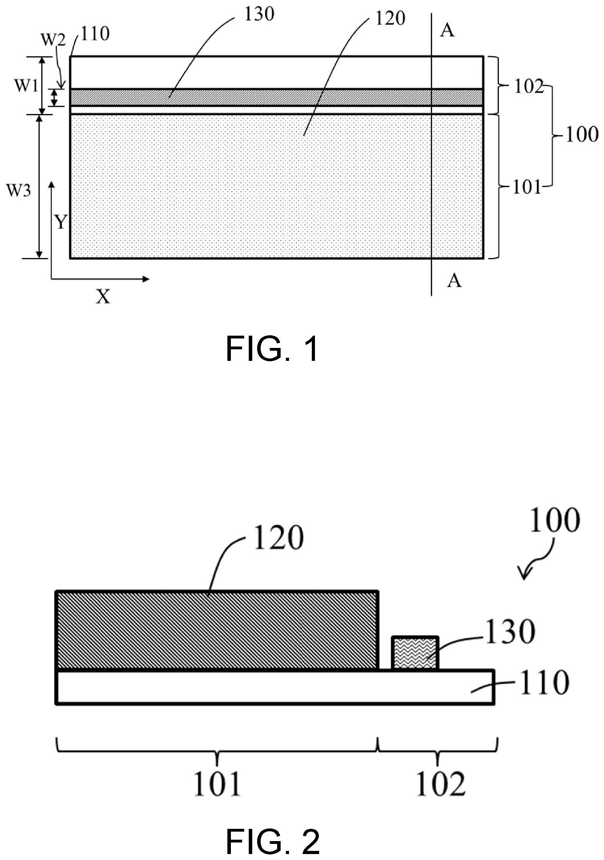

Referring to FIG. 1, in an embodiment of the disclosure, an electrode sheet 100 includes a current collector 110, and at least one surface of the current collector 110 includes an active material layer coated region 101 and an active material layer uncoated region 102 adjacent to each other in a first direction Y. An active material layer 120 is coated on the active material layer coated region 101. In a second direction X, a reinforcing layer 130 is coated on at least a portion of the active material layer uncoated region 102, and the second direction X is perpendicular to the first direction Y. In the first direction Y, a width of the active material layer uncoated region 102 is W1 mm, and a width of the reinforcing layer 130 is W2 mm, satisfying 2.5≤W1/W2≤7.5. In a specific embodiment of the disclosure, the width W2 of the reinforcing layer 130 is, for example, 3 mm to 12 mm. When the width of the active material layer uncoated region 102 is greater, there is a high risk of the active material layer uncoated region 102 folding over and wrinkling during die-cutting and winding. By controlling a ratio of the width of the active material layer uncoated region 102 to the width of the reinforcing layer 130, when the width of the active material layer uncoated region 102 is greater, the reinforcing layer 130 may serve a supporting function to prevent folding over and wrinkling. When the width of the active material layer uncoated region 102 is small, the width of the reinforcing layer 130 is prevented from occupying a welding region of the active material layer uncoated region 102 used for connecting to an external electrode terminal, which may affect the welding of the active material layer uncoated region 102.

Referring to FIG. 1, in an embodiment of the disclosure, in the first direction Y, there is a predetermined gap between the active material layer 120 and the reinforcing layer 130, denoted as G mm, satisfying 22≤W1/G≤400. In a specific embodiment of the disclosure, the predetermined gap G is, for example, 0.1 mm to 1.1 mm. By controlling a ratio of W1/G, within an appropriate range of the width of the active material layer uncoated region 102 and the predetermined gap, this ratio prevents the predetermined gap from being excessively large, which may weaken the effect of the reinforcing layer and may result in insufficient welding region in the active material layer uncoated region 102 for connecting to an external electrode terminal. By taking into account both the width of the active material layer uncoated region 102 and the predetermined gap, the predetermined gap is prevented from being excessively small, which may cause the reinforcing layer 130 and the active material layer 120 to intermix with each other and result in edge swelling and other such conditions. In this way, a clear boundary is ensured between the reinforcing layer 130 and the active material layer 120, battery performance is improved, and safety hazards are reduced.

Referring to FIG. 1, in an embodiment of the disclosure, in the first direction Y, a width of the active material layer 120 is W3 mm, satisfying 3≤W3/W1≤11. In a specific embodiment of the disclosure, the width W1 of the active material layer uncoated region 102 is, for example, 30 mm to 40 mm. By controlling a ratio of the width of the active material layer 120 to the width of the active material layer uncoated region 102, with the arrangement of the reinforcing layer, the widths of both the active material layer 120 and the active material layer uncoated region 102 may be taken into account, so that the bending of the uncoated region for electrical connection with the electrode terminal is facilitated, folding and wrinkling are avoided, and the mass and energy density of the battery are balanced.

Referring to FIG. 1 and FIG. 2, in an embodiment of the disclosure, the current collector 110 is, for example, a negative current collector, and the current collector 110 is, for example, a copper foil. At least one surface of the current collector 110 includes the active material layer coated region 101 and the active material layer uncoated region 102 adjacent to each other in the first direction Y. The active material layer 120 is coated on the active material layer coated region 101, and the reinforcing layer 130 is disposed on a portion of the active material layer uncoated region 102. In another embodiment of the disclosure, the active material layer 120 is arranged on two surfaces of the current collector 110. In the first direction Y, the reinforcing layer 130 spaced apart from the active material layer coated region 102 is disposed on the two surfaces of the current collector 110. That is, the current collector 110 has two surfaces opposite to each other in its own thickness direction. The active material layer 120 and the reinforcing layer 130 may be disposed together at intervals on one surface of the current collector 110, or the active material layer 120 may be disposed on both surfaces of the current collector 110, with the reinforcing layer 130 disposed on one surface of the current collector 110. Alternatively, the active material layer 120 and the reinforcing layer 130 may be disposed together at intervals on both surfaces of the current collector 110. A thickness of the reinforcing layer 130 on one surface of the current collector is H µm, a thickness of the current collector 110 is h µm, satisfying 1≤H/h≤6. A ratio of the thickness of the active material layer 120 on one surface of the current collector to the thickness of the current collector 110 is, for example, 5.5 to 34. In a specific embodiment of the disclosure, the thickness h of the current collector 110 is, for example, 4 µm to 5.5 µm, and the thickness of the active material layer 120 is, for example, 30 µm to 150 µm. Since the thinner the current collector thickness, the more prone it is to wrinkling during die-cutting and winding, particularly for thin materials with a thickness of ≤5.5 µm, setting appropriate thicknesses for the active material layer and the current collector, matched with the design of the reinforcing layer, may prevent wrinkling of the current collector. Further, the strength of the active material layer uncoated region may be maintained, and the problem of wavy edges caused by laser cutting at the boundary between the active material layer and the active material layer uncoated region may also be avoided. Further, the bottom support of the active material layer uncoated region is improved, so that tab insertion may be avoided for the tab formed subsequently during bending.

Referring to FIG. 1 and FIG. 2, in an embodiment of the disclosure, the active material layer 120 is, for example, a negative active material layer, and the active material layer 120 includes, for example, a negative active material, a negative binder, a thickener, and a negative conductive agent, etc. The negative active material is selected from, for example, any one or a combination of at least two of soft carbon, hard carbon, artificial graphite, silicon, silicon oxide compounds, silicon carbon compounds, or lithium titanate, etc. The negative binder is selected from, for example, any one or more of polypropylene, polyacrylic acid and its derivatives, or styrene-butadiene rubber, etc. The negative conductive agent is selected from, for example, any one or more of conductive carbon black (Super-P, SP), acetylene black, carbon nanotubes, and graphene, etc., and the thickener is selected from, for example, sodium carboxymethyl cellulose. On the current collector 110, the thickness of the active material layer 120 is uniform, so that the consistency of charge and discharge of the battery is improved. In the disclosure, a mass ratio of the negative active material, the negative binder, the thickener, to the negative conductive agent is not limited, and the selection is made according to preparation needs.

Referring to FIG. 1 and FIG. 2, in an embodiment of the disclosure, the reinforcing layer 130 includes, for example, ceramic particles, an aqueous binder, and a colorant. The ceramic particles include, for example, at least one of boehmite, aluminum oxide, titanium dioxide, zirconium dioxide, zinc oxide, barium sulfate, boron nitride, aluminum nitride, or magnesium nitride. The aqueous binder includes, for example, at least one of polyacrylic acid (PAA), polymerized styrene butadiene rubber (SBR), or carboxymethylcellulose sodium (CMC-Na). The colorant includes, for example, at least one of carbon black, chromium oxide green, cobalt green, cobalt blue, iron blue, cadmium red, carbon black, or iron oxide red. By arranging a colorant in the reinforcing layer 130, a grayscale value of the reinforcing layer 130 is, for example, 0 to 110. That is, the color difference between the reinforcing layer 130 and the current collector 110 is increased, and the grayscale value of the reinforcing layer is less than the grayscale value of the current collector, so that during the die-cutting process for forming the tab, charge-coupled device detection (CCD) may readily identify the size and position of the reinforcing layer 130. Further, the reinforcing layer 130 may absorb laser energy, so that phenomena such as reflection and scattering of the laser is reduced. In this way, the laser energy is more concentrated, so die-cutting power is thereby reduced, and energy consumption is lowered, making the cut edges less prone to burrs, and the problem of short circuits caused by burrs is decreased in turn. By selecting an aqueous binder, when preparing the reinforcing layer 130, the negative electrode sheet production line may not require organic gas recovery equipment. The ceramic particles may support of the reinforcing layer 130, so that the design of the width of the active material layer uncoated region 102 is improved, and that a larger width of the active material layer uncoated region 102 may be obtained, while at the same time, the insulation of the reinforcing layer 130 is improved and leakage is prevented.

Referring to FIG. 1 and FIG. 2, in an embodiment of the disclosure, the mass ratio of the ceramic particles, the aqueous binder, and the colorant in the reinforcing layer 130 is, for example, 10-20:75-90:0.5-5. By using a high content of aqueous binder, the adhesion between the reinforcing layer 130 and the current collector 110 may be improved, so that the reinforcing layer 130 is prevented from peeling off during the bending process of the subsequently formed tab. In an embodiment of the disclosure, during the tab bending process, the peel force between the reinforcing layer 130 and the current collector 110 is greater than 300 N/m.

Referring to FIG. 2, in an embodiment of the disclosure, when forming the active material layer 120 and the reinforcing layer 130, the negative active material, the negative binder, the thickener, and the negative conductive agent are dispersed in water at a mass ratio to obtain a negative slurry. The ceramic particles, the aqueous binder, and the colorant are dispersed in water at a mass ratio to obtain a reinforcing layer slurry. During the coating process, the negative slurry and the reinforcing layer slurry are coated onto the current collector 110 together and dried to obtain the active material layer 120 and the reinforcing layer 130.

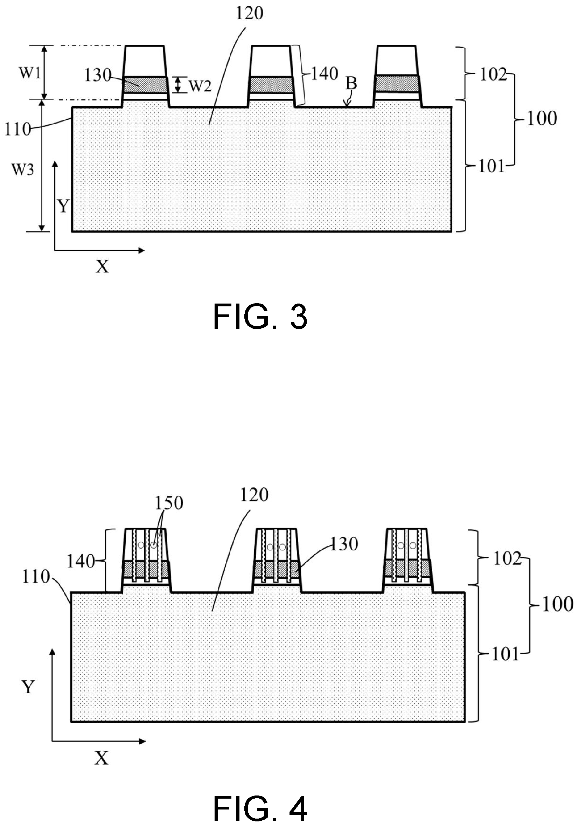

Referring to FIG. 3 and FIG. 4, in an embodiment of the disclosure, the electrode sheet 100 further includes a tab 140, where a portion of the active material layer 120 covers at least a portion of a surface of the tab 140 in the first direction Y. In this case, a height of the tab 140 includes a size of the active material layer that may extend to both front and back surfaces of the tab 140.

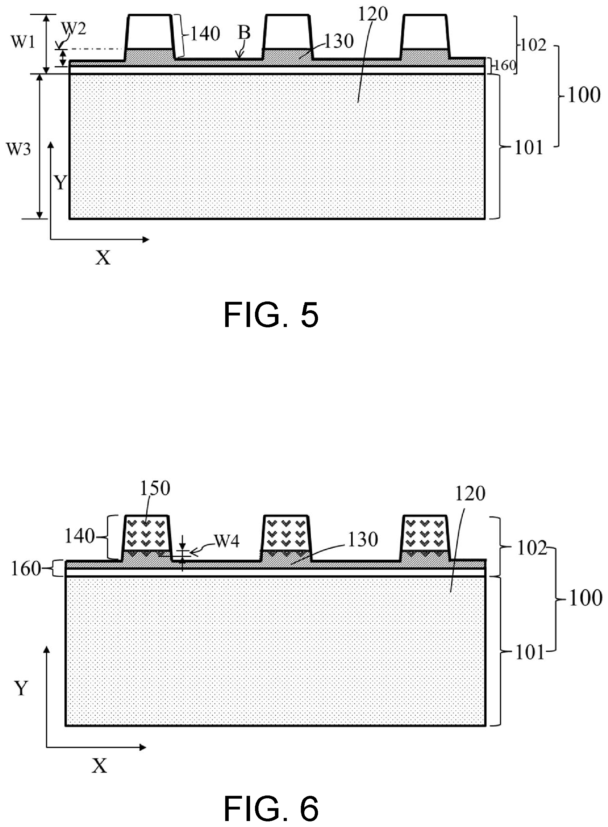

Referring to FIG. 5 and FIG. 6, in another embodiment of the disclosure, the electrode sheet 100 further includes the tab 140, a transition region 160 is disposed between the tab 140 and the active material layer coated region 101, and the reinforcing layer 130 is located on a portion of the transition region 160 and a portion of the surface of the tab 140. In this case, the height of the tab includes the size of the reinforcing layer located on a portion of the tab 140.

Referring to FIG. 3 and FIG. 5, in an embodiment of the disclosure, after forming the active material layer 120 and the reinforcing layer 130, the tab 140 is obtained by die-cutting a portion of the active material layer uncoated region 102 or die-cutting the active material layer uncoated region 102 and a portion of the active material layer coated region 101. The die-cutting stop position is recorded as a shoulder portion B of the tab 140, and the tab 140 extends from the shoulder portion B to a side of the active material layer uncoated region 102 away from the active material layer 120. By arranging the transition region 160, the laser energy for die-cutting may be reduced, so that energy consumption is lowered. That is, compared to die-cutting to a region partially provided with the active material layer, the laser energy is lower, the laser power is reduced, the foil exposure phenomenon is decreased, the energy density and cycle performance of the battery are improved, and the safety performance is enhanced.

Referring to FIG. 3 to FIG. 6, in an embodiment of the disclosure, the tab 140 further includes a plurality of reinforcing ribs 150. The reinforcing ribs 150 are formed by stamping the tab 140 and are disposed on the tab 140 in at least one shape such as dot-shaped, strip-shaped, wave-shaped, or zigzag-shaped. In the first direction and/or the second direction, every two adjacent reinforcing ribs 150 are spaced apart from each other. When the reinforcing ribs 150 are distributed in a strip shape, the reinforcing ribs 150 resemble a plurality of parallel elongated strips. A ratio of a width (W4 mm) of a maximum overlapping position of the reinforcing ribs 150 and the reinforcing layer 130 to the width (W2 mm) of the reinforcing layer 130 is 0.1 to 1. A maximum distance from the reinforcing ribs 150 located on the reinforcing layer 130 in a direction away from the first direction to a side edge of the reinforcing layer 130 away from the active material layer 120 is defined as W4. When W4/W2 is 1, it indicates that the reinforcing ribs 150 at least overlap with the side edge of the reinforcing layer 130 close to the active material layer 120, or part of the reinforcing ribs 150 are located within the predetermined gap between the reinforcing layer 130 and the active material layer 120. In a specific embodiment of the disclosure, after the tab 140 is formed, the reinforcing ribs 150 are obtained, for example, by stamping and forming the current collector 110 in the region of the tab 140. In other embodiments, the reinforcing ribs 150 may also be formed by other methods; for example, the reinforcing ribs 150 are separately formed and then fixed on the current collector 110. By controlling the ratio of W4/W2 within an appropriate range, the strength of the reinforcing layer may be improved and tab wrinkling may be reduced, so that the width of the active material layer uncoated region 102 is further increased to accommodate more layers of tabs and reduce the direct current resistance (DCR) of the battery.

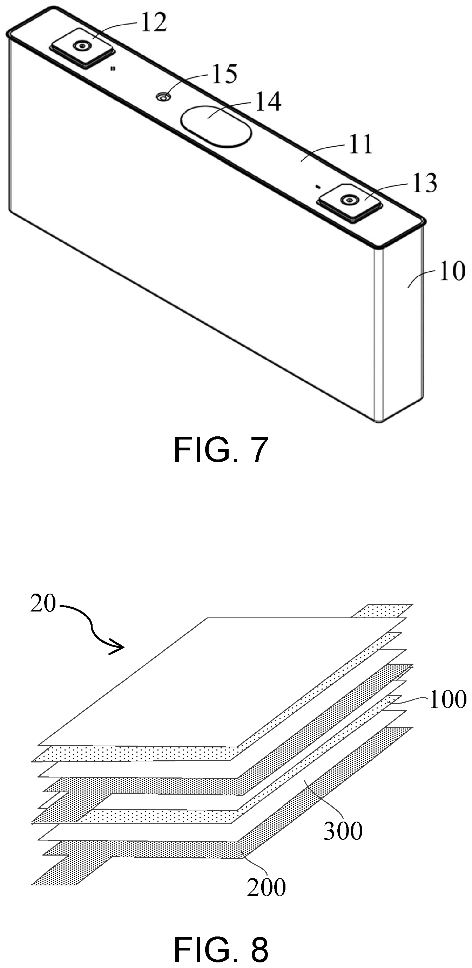

Referring to FIG. 7, in an embodiment of the disclosure, the battery further includes a housing 10 having an upper opening, an electrode assembly disposed in the housing 10, and a lid assembly 11 closing the upper opening. The disclosure does not limit the type and shape of the battery. The battery may be, for example, a primary battery or a secondary battery. The secondary battery may be, for example, a pouch battery, a cylindrical battery, or a prismatic battery, and may also be, for example, a sodium-ion secondary battery or a lithium-ion secondary battery. In this embodiment, a lithium-ion secondary battery is treated as an example for illustration.

Referring to FIG. 7 to FIG. 9, in an embodiment of the disclosure, when the secondary battery is, for example, a prismatic battery, the prismatic battery includes, for example, the housing 10, the lid assembly 11, and the electrode assembly 20 disposed in the housing 10, and tabs of the electrode assembly 20 are electrically connected to electrode terminals on the housing 10. The shape of the housing 10 matches the shape of the electrode assembly 20, and the material of the housing 10 is, for example, an aluminum housing, a steel housing, or a flexible housing, and the housing 10 is an accommodating cavity having an upper opening for accommodating the electrode assembly 20. Specifically, after the electrode assembly 20 is placed into the housing 10 through the upper opening, the lid assembly 11 is used to seal the housing 10, and a first electrode terminal 12, a second electrode terminal 13, an explosion protection valve 14, and a liquid injection hole 15 are disposed on the lid assembly 11. An electrolyte is injected through the liquid injection hole 15, and the liquid injection hole 15 is then sealed. The first electrode terminal 12 and the second electrode terminal 13 have opposite polarities, and the first electrode terminal 12 and the second electrode terminal 13 are respectively a positive electrode or a negative electrode. In the disclosure, the specific polarity types corresponding to the first electrode terminal 12 and the second electrode terminal 13 are not limited. The first electrode terminal 12 is electrically connected to the tab of the same polarity on the electrode assembly 20, and the second electrode terminal 13 is electrically connected to the tab of the same polarity on the electrode assembly 20. In this embodiment, the positions of the first electrode terminal 12 and the second electrode terminal 13 are not limited, and they may be located at the same end of the housing or at both ends of the housing and are specifically set according to the positions of the tabs on the electrode assembly 20 or design requirements.

Referring to FIG. 7, in an embodiment of the disclosure, when the first electrode terminal 12 and the second electrode terminal 13 are disposed at one end of the housing, the explosion protection valve 14 and the liquid injection hole 15 are disposed between the first electrode terminal 12 and the second electrode terminal 13. The explosion protection valve 14 is disposed, for example, at a middle position between the first electrode terminal 12 and the second electrode terminal 13, and has a predetermined gap from the first electrode terminal 12 and the second electrode terminal 13. The liquid injection hole 15 is disposed between the explosion protection valve 14 and the first electrode terminal 12 or disposed between the explosion protection valve 14 and the second electrode terminal 13. That is, the explosion protection valve 14, the liquid injection hole 15, the first electrode terminal 12, and the second electrode terminal 13 are disposed at intervals from one another. The explosion protection valve 14 may activate a ventilation function during normal operation of the cell, allowing airflow to circulate between the inside and outside of the cell while preventing particulate matter from circulating. When thermal runaway occurs in the cell and the pressure difference between the inside and outside of the cell reaches a predetermined explosion protection value, the explosion protection valve opens, so that both gas and solid may be discharged from the inside of the cell to the outside of the cell through the explosion protection valve, and that the safety performance of the cell is improved.

Referring to FIG. 8 to FIG. 9, in an embodiment of the disclosure, the electrode assembly 20 includes a negative electrode sheet, a positive electrode sheet 200, and a separator 300. The negative electrode sheet is selected from the electrode sheet 100 described in the foregoing paragraphs. The separator 300 is disposed between the positive electrode sheet 200 and the negative electrode sheet, so as to prevent the positive electrode sheet 200 and the negative electrode sheet from contacting each other and causing safety issues. An electrolyte (not shown) is filled among the negative electrode sheet, the positive electrode sheet 200, and the separator 300, as well as between the electrode assembly 20 and the housing, to conduct ions between the positive and negative electrode sheets, where the electrolyte is any electrolyte suitable for a lithium-ion battery. The stacking manner of the positive and negative electrode sheets, which is selected according to manufacturing requirements, is not specifically limited in the disclosure.

In an embodiment of the disclosure, the electrolyte includes, for example, an organic solvent and a lithium salt. The organic solvent is selected from any one or more of ethylene carbonate (EC), propylene carbonate (PC), ethyl acetate (EA), ethyl methyl carbonate (EMC), dimethyl carbonate (DMC), or diethyl carbonate (DEC). The lithium salt is selected from, for example, any one or more of lithium bis(fluorosulfonyl)imide (LiFSi), lithium difluorophosphate (LiPO₂F₂), lithium hexafluorophosphate (LiPF₆), or lithium tetrafluoroborate (LiBF₄). In an embodiment of the disclosure, the lithium salt is selected from, for example, lithium hexafluorophosphate, and the organic solvent is selected from, for example, a mixture of ethylene carbonate, ethyl methyl carbonate, diethyl carbonate, and propylene carbonate. The ethylene carbonate, ethyl methyl carbonate, diethyl carbonate, and propylene carbonate are mixed, for example, at a volume ratio of 1:1:1:1, and in an argon atmosphere glove box with a water content of less than 10 ppm, sufficiently dried LiPF₆ is dissolved in the mixed organic solvent, and after mixing uniformly, the electrolyte is obtained, where the concentration of LiPF₆ is, for example, 1 mol/L.

Referring to FIG. 8 to FIG. 9, in an embodiment of the disclosure, the electrode sheet 100 and the positive electrode sheet 200 are made into the electrode assembly 20 by, for example, winding or stacking, and the stacking may be, for example, laminated stacking or Z-type stacking, which is not specifically limited in the disclosure. The separator 300 is, for example, a polyethylene (PE) film, a polypropylene (PP) film, a glass fiber film, a polyethylene film, or a composite film. In the disclosure, the thickness of the separator 300 is not limited, as long as it can meet the usage requirements.

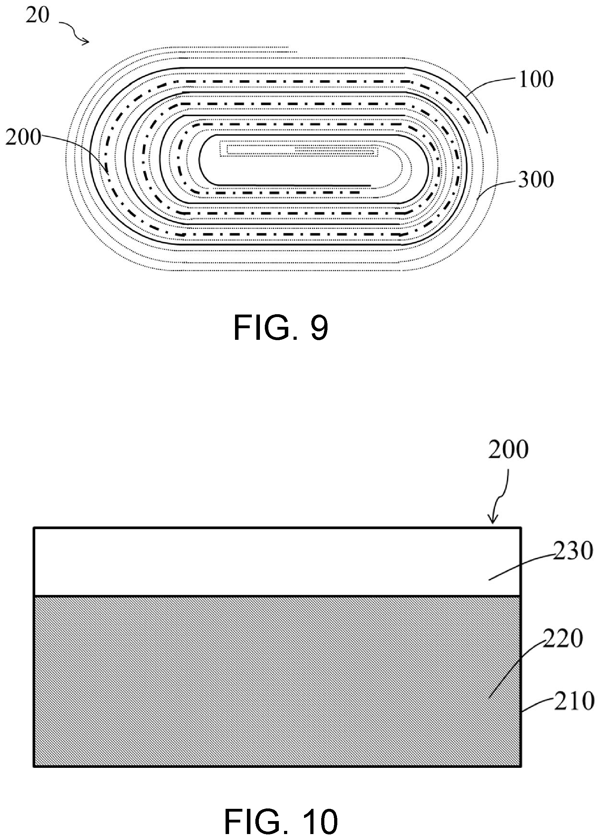

Referring to FIG. 10, in an embodiment of the disclosure, the positive electrode sheet 200 includes a positive current collector 210 and a positive active material layer 220 coated on at least one surface of the positive current collector 210. That is, the positive current collector 210 has two surfaces opposite to each other in its own thickness direction, and the positive active material layer 220 may be disposed on either one or both of the two surfaces of the positive current collector 210. The positive current collector 210 may be an aluminum foil current collector, and the thickness of the aluminum foil current collector is, for example, 5 µm to 20 µm. Further, the thickness of the aluminum foil current collector is, for example, 10 µm to 15 µm. The positive current collector 210 may also be a composite current collector, and the composite current collector includes a polymer substrate and aluminum layers located on the upper and lower surfaces of the polymer substrate. The polymer substrate may be selected from polyethylene terephthalate, polypropylene, polyimide, polystyrene, or polyamide, etc.

Referring to FIG. 10, in an embodiment of the disclosure, on the positive current collector 210, the region coated with the positive active material layer 220 is defined as an electrode sheet region, and the region of the positive current collector 210 not coated with the positive active material layer 220 is defined as a positive tab region 230, which is used to form a positive tab. The electrode sheet region and the positive tab region 230 are disposed adjacent to each other. The positive active material layer 220 includes a positive active material, a positive conductive agent, and a positive binder. The positive active material may be selected from one or more combinations of lithium nickel cobalt manganese oxide, lithium nickel manganese oxide, lithium titanate, lithium nickel cobalt manganese aluminum oxide, lithium iron phosphate, and lithium manganese iron phosphate. The positive conductive agent is selected from, for example, one of conductive carbon black, acetylene black, nano metal powder, graphene, carbon nanotubes, or carbon nanofibers, or a combination of two or more mixed in any ratio. The positive binder is selected from one or more mixtures of polyvinylidene fluoride (PVDF), polyvinylidene fluoride-hexafluoropropylene, or polytetrafluoroethylene. The thickness of the positive active material layer 220 is not limited in the disclosure, and the thickness is specifically selected according to battery design requirements.

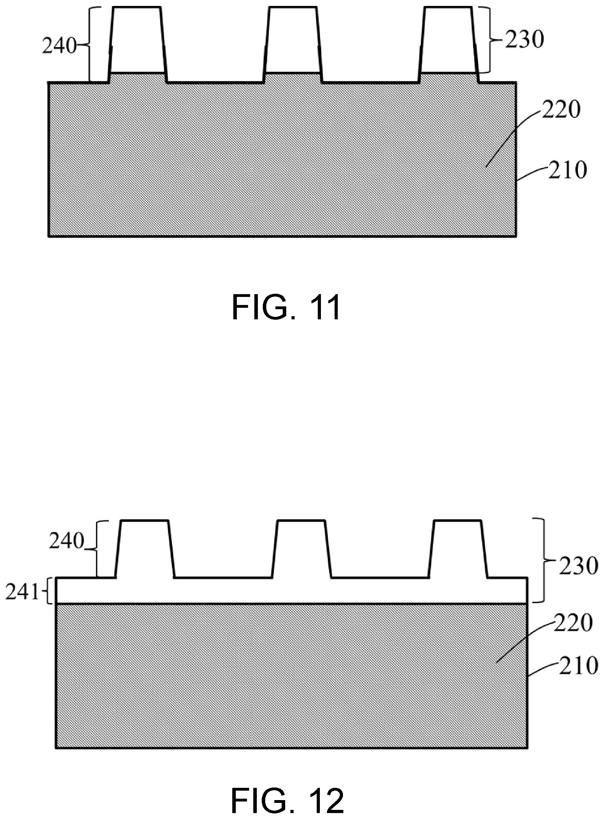

Referring to FIG. 11 and FIG. 12, in an embodiment of the disclosure, the positive electrode sheet 200 includes a plurality of positive tabs 240, and a portion of the positive active material layer 220 covers at least part of the surfaces of the positive tabs 240. Alternatively, a connecting region 241 is provided between the positive tabs 240 and the positive active material layer 220, and the connecting region 241 is located within the positive tab region 230. That is, the positive active material layer 220 is not provided on the connecting region 241, and the positive active material layer 220 does not cover the positive tabs 240.

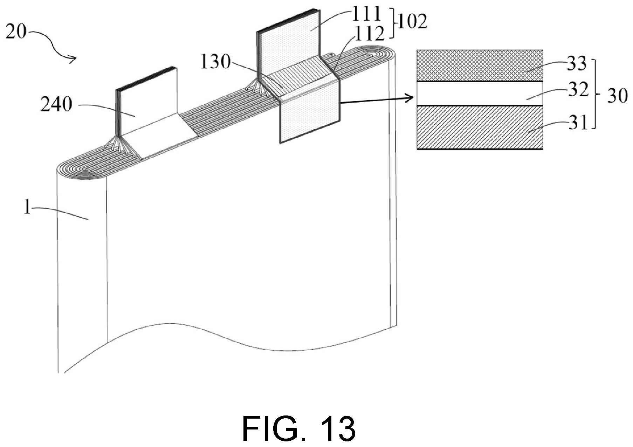

Referring to FIG. 4, FIG. 6, and FIG. 13, in an embodiment of the disclosure, the negative electrode sheet, the positive electrode sheet, and the separator are formed into an electrode assembly 20, for example, by winding or stacking, and the like. The electrode assembly 20 includes a base 1 and an active material layer uncoated region 102 located at one end of the base 1. Herein, the base 1 is a portion formed as a laminate with the shoulder portion B of the tab, the active material layer uncoated region 102 includes a connecting portion 111 and a bent portion 112, the connecting portion 111 is fixedly connected to the lid assembly, the bent portion 112 is connected between the base 1 and the connecting portion 111, and the reinforcing layer 130 covers the bent portion 112. The battery further includes an adhesive tape 30. The adhesive tape 30 is disposed on at least one side of the negative tab and includes a first adhesive region 31, a second adhesive region 33, and a non-adhesive region 32 located between the first adhesive region 31 and the second adhesive region 33. The non-adhesive region 32 covers the reinforcing layer 130, the first adhesive region 31 covers the base 1, and the second adhesive region 33 covers the connecting portion 111. The adhesive tape improves the safety against foil exposure, the non-adhesive region covers the reinforcing layer to prevent the reinforcing layer from detaching, and the adhesive tape provides support and may prevent tab insertion and tearing.

The disclosure will be explained more specifically in the following paragraphs by reference to examples, and these examples should not be construed as limiting. Appropriate modifications may be made within the scope consistent with the spirit of the disclosure, and all such modifications fall within the technical scope of the disclosure.

### Example 1

Preparation of a negative electrode sheet: Boehmite, polyacrylic acid, and carbon black were mixed at a mass ratio of 20:75:5, deionized water was added, the mixture was uniformly mixed under a vacuum mixer, and a reinforcing layer slurry was obtained. Artificial graphite, conductive carbon black, sodium carboxymethyl cellulose, and styrene-butadiene rubber were mixed according to a mass ratio of 96:1:1:2, deionized water was added, the mixture was uniformly mixed under a vacuum mixer, and a negative electrode slurry was obtained. The negative slurry and the reinforcing layer slurry were synchronously coated onto a 6 µm thick copper foil, dried at room temperature, transferred to an oven for drying, and then subjected to cold pressing, edge trimming, sheet cutting, and stamping processes, and a negative electrode sheet was obtained. During the formation of the tab, the shoulder portion of the tab is located within the reinforcing layer, i.e., a transition region is provided. The width of the active material layer coated region is 210 mm, the width of the active material layer uncoated region is 30 mm, the width of the reinforcing layer is 12 mm, the thickness of the reinforcing layer is 18 µm, the predetermined gap between the reinforcing layer and the active material layer is 0.6 mm. That is, the ratio of the width of the active material layer uncoated region to the width of the reinforcing layer is 2.5, the ratio of the width of the active material layer uncoated region to the predetermined gap is 50, the ratio of the thickness of the reinforcing layer to the thickness of the current collector thickness is 3, the ratio of the width of the active material layer to the width of the active material layer uncoated region is 7, and the ratio of the width of the maximum overlapping position of the reinforcing rib and the reinforcing layer to the width of the reinforcing layer is 0.5.

Preparation of positive electrode sheet: LiNi₀₈Co_{0.1}Mn_{0.1}O₂, acetylene black, and polyvinylidene fluoride were mixed at a mass ratio of 97:1:2, N-methylpyrrolidone was added, the mixture was stirred under a vacuum mixer until the system becomes homogeneous, and a positive slurry was obtained. The positive slurry was uniformly coated onto an aluminum foil, air-dried at room temperature, transferred to an oven for drying, and then subjected to cold pressing, edge trimming, sheet cutting, and slitting processes, and a positive electrode sheet was obtained.

Preparation of electrolyte: Ethylene carbonate, ethyl methyl carbonate, diethyl carbonate, and propylene carbonate were mixed at a volume ratio of 1:1:1:1, and in an argon atmosphere glove box with a water content of less than 10 ppm, fully dried LiPF₆ was dissolved in the mixed organic solvent, and after uniform mixing, the electrolyte was obtained, where the concentration of LiPF₆ is, for example, 1 mol/L.

Selection of separator: Polyethylene with a thickness of 9 µm was used as the separator.

Preparation of battery: The positive electrode sheet, the separator, and the negative electrode sheet were stacked in sequence and wound, with the separator positioned between the positive electrode sheet and the negative electrode sheet to serve an isolation function, except for the innermost and outermost turns. Each turn of the negative electrode sheet in the middle produced one tab, so that a wound bare cell was obtained. The bare cell was then placed into an aluminum housing, assembled with a lid assembly, and then sealed after the electrolyte was injected, and a lithium-ion battery was obtained.

### Example 2

The width of the reinforcing layer was 6 mm, i.e., the ratio of the width of the active material layer uncoated region to the width of the reinforcing layer was 5, and the remaining operations were consistent with that of Example 1.

### Example 3

The width of the reinforcing layer was 4mm, i.e., the ratio of the width of the active material layer uncoated region to the width of the reinforcing layer was 7.5, and the remaining operations were consistent with that of Example 1.

### Example 4

The width of the active material layer uncoated region was 40 mm, the width of the reinforcing layer was 8 mm, i.e., the ratio of the width of the active material layer uncoated region to the width of the reinforcing layer was 5, and the remaining operations were consistent with that of Example 1.

### Example 5

The width of the active material layer uncoated region was 40 mm, the predetermined gap between the reinforcing layer and the active material layer was 0.1 mm, the ratio of the width of the active material layer uncoated region to the predetermined gap was 400, and the remaining operations were consistent with that of Example 2.

### Example 6

The predetermined gap between the reinforcing layer and the active material layer was 1.1 mm, the ratio of the width of the active material layer uncoated region to the predetermined gap was 27.3, and the remaining operations were consistent with that of Example 2.

### Example 7

The thickness of the reinforcing layer was 6 µm, the ratio of the thickness of the reinforcing layer to the thickness of the current collector was 1, and the remaining operations were consistent with that of Example 2.

### Example 8

The thickness of the reinforcing layer was 36 µm, the ratio of the thickness of the reinforcing layer to the thickness of the current collector was 6, and the remaining operations were consistent with that of Example 2.

### Example 9

The thickness of the current collector was 5.5 µm, the thickness of the reinforcing layer was 16.5 µm, the ratio of the thickness of the reinforcing layer to the thickness of the current collector was 3, and the remaining operations were consistent with that of Example 2.

### Example 10

The thickness of the current collector was 4.5 µm, the thickness of the reinforcing layer was 13.5 µm, the ratio of the thickness of the reinforcing layer to the thickness of the current collector was 3, and the remaining operations were consistent with that of Example 2.

### Example 11

The thickness of the current collector was 4 µm, the thickness of the reinforcing layer was 12 µm, the ratio of the thickness of the reinforcing layer to the thickness of the current collector was 3, and the remaining operations were consistent with that of Example 2.

### Comparative Example 1

The width of the reinforcing layer was 15mm, i.e., the ratio of the width of the active material layer uncoated region to the width of the reinforcing layer was 2, and the remaining operations were consistent with that of Example 1.

### Comparative Example 2

The width of the reinforcing layer was 3.5mm, i.e., the ratio of the width of the active material layer uncoated region to the width of the reinforcing layer was 8.6, and the remaining operations were consistent with that of Example 1.

### Comparative Example 3

The predetermined gap between the reinforcing layer and the active material layer was 1.4mm, the ratio of the width of the active material layer uncoated region to the predetermined gap was 21.4, and the remaining operations were consistent with that of Example 2.

### Comparative Example 4

The predetermined gap between the reinforcing layer and the active material layer was 0.05mm, the ratio of the width of the active material layer uncoated region to the predetermined gap was 600, and the remaining operations were consistent with that of Example 2.

In an embodiment of the disclosure, in order to obtain the tab wrinkling performance, after a bare cell was obtained, the distance from the side of each layer of tab away from the active material layer to the active material layer was measured by a camera, and the difference from the design value of the width of the active material layer uncoated region was calculated (if it was the design value after battery disassembly, for tabs of equal height, the maximum value of the width of the uncoated region was adopted), and the average value of the differences was obtained, with the average value defined as the tab deviation value (if the deviation value of the active material layer uncoated region was obtained, the distance from the side of the active material layer uncoated region of each layer away from the active material layer to the active material layer was obtained by a camera). The tab deviation value was used to characterize the tab wrinkling performance, and the smaller the tab deviation value, the fewer occurrences of tab wrinkling.

In an embodiment of the disclosure, in order to obtain the tab folding condition, after a bare cell was obtained, an orthographic projection area of each tab on the plane where the current collector was located was obtained by a CCD camera, recorded as S1. The orthographic projection area of each tab after being laid flat on the plane where the current collector was located was recorded as S2 (if the folding condition of the active material layer uncoated region was obtained, the orthographic projection area of the active material layer uncoated region of each layer on the plane where the current collector was located, as well as the orthographic projection area of the active material layer uncoated region of each layer after being laid flat on the plane where the current collector was located, were obtained by a CCD camera). The error was calculated as (S2-S1)/S2×100%, tabs with an error greater than 5% were defined as tabs with folding, and the ratio of the number of layers with tab folding to the total number of tab layers was calculated.

In an embodiment of the disclosure, after the negative electrode sheet was obtained, it was observed whether the reinforcing layer and the negative active material layer were fused, where the fused state was defined as the fusion of the active material layer material in the reinforcing layer region, and the unfused appearance state was defined as the reinforcing layer and the active material layer being completely separated with a relatively uniform corresponding gap.

In an embodiment of the disclosure, after the battery cells of Examples 1 to 11 and Comparative Examples 1 to 4 were disassembled, the actual number of tab welding layers was observed, and the ratio of the actual number of tab welding layers to the designed number of tabs was calculated (if the number of welding layers of the active material layer uncoated region was obtained, the actual number of welding layers and the designed number of layers of the active material layer uncoated region were obtained).

**Table 1: Some characteristics and performance of negative electrode sheets in Examples 1 to 4 and Comparative Examples 1 to 2**

| Group | Current collector thicknes s µm | W1 mm | W2 mm | W1 /W 2 | Ceramic particles: binder: color developer | Active material layer uncoated region deviation value mm | Active material layer uncoated region folding ratio | Ratio of actual welding layers to active material layer uncoated region layers |
|---|---|---|---|---|---|---|---|---|
| Example 1 | 6 | 30 | 12 | 2.5 | 20: 75: 5 | 0.1 | <0.5% | 100% |
| Example 2 | 6 | 30 | 6 | 5 | 20: 75: 5 | 0.2 | <0.5% | 100% |
| Example 3 | 6 | 30 | 4 | 7.5 | 20: 75: 5 | 0.3 | <0.5% | 100% |
| Example 4 | 6 | 40 | 8 | 5 | 20: 75: 5 | 0.1 | <0.5% | 100% |
| Comparative Example 1 | 6 | 30 | 15 | 2 | 20: 75: 5 | 0.1 | <0.5% | 80% |
| Comparative Example 2 | 6 | 30 | 3.5 | 8.6 | 20: 75: 5 | 0.5 | > 1.5% | 100% |

Referring to Table 1, by comparing Examples 1 to 4 and Comparative Examples 1 to 2, it can be seen that when the width of the reinforcing layer is small, i.e., when W1/W2 is large, the deviation value of the active material layer uncoated region is large, and the folding ratio of the active material layer uncoated region is large, indicating that there are more wrinkles and folds in the active material layer uncoated region. As the width of the reinforcing layer gradually increases, the deviation value of the active material layer uncoated region gradually decreases, and the folding ratio of the active material layer uncoated region is less than 0.5%, indicating that increasing the width of the reinforcing layer may reduce the wrinkles and folds of the active material layer uncoated region. When the width of the reinforcing layer is too large, i.e., when W1/W2 is less than 2.5, welding the region of the active material layer uncoated region used for welding with the connection sheet causes cavity explosion, resulting in a difference between the actual number of welding layers of the active material layer uncoated region and the designed number of layers of the active material layer uncoated region, which may lead to an increase in interface contact resistance and a decrease in the bonding strength between the active material layer uncoated region and the electrode sheet. As such, the active material layer uncoated region may further be detached or make poor contact, or the local temperature in the battery may rise, and a thermal runaway chain reaction may thus be triggered. Therefore, controlling W1/W2 within the range of 2.5 to 7.5 may improve the safety performance of the battery while reducing wrinkles and folds in the active material layer uncoated region.

**Table 2: Some characteristics and performance of negative electrode sheets in Examples 2 and 5 to 6 and Comparative Examples 3 to 4**

| Group | Current collector thickness µm | W1 mm | G mm | W1/G | Ceramic particles: binder: color developer | Tab deviation value | Whether fuses with negative active material layer |
|---|---|---|---|---|---|---|---|
| Example 2 | 6 | 30 | 0.6 | 50 | 20: 75: 5 | 0.2 | no |
| Example 5 | 6 | 40 | 0.1 | 400 | 20: 75: 5 | 0.2 | no |
| Example 6 | 6 | 30 | 1.1 | 27.3 | 20: 75: 5 | 0.3 | no |
| Comparative Example 3 | 6 | 30 | 1.4 | 21.4 | 20: 75: 5 | 0.5 | no |
| Comparative Example 4 | 6 | 30 | 0.05 | 600 | 20: 75: 5 | 0.2 | yes |

Referring to Table 2, by comparing Examples 2 and 5 to 6 and Comparative Examples 3 to 4, it can be seen that when the ratio of the width of the active material layer uncoated region to the predetermined gap between the reinforcing layer and the active material layer is greater than 400, i.e., when the predetermined gap is small, the reinforcing layer and the negative active material layer are fused, which may lead to problems such as abnormal interface contact and stress concentration and may also cause a decrease in the utilization rate of the active material. As the predetermined gap increases, i.e., as the W1/G ratio decreases, the fusion of the reinforcing layer and the negative active material layer may be avoided, and as the W1/G ratio decreases, the tab deviation value remains relatively stable. However, when the W1/G ratio is less than 22, the tab deviation value is large, which is because the gap between the reinforcing layer and the active material layer is excessively large to exert the effect of the reinforcing layer, resulting in an increase in wrinkles. Therefore, controlling the W1/G ratio may reduce the fusion while reducing the wrinkles and folds of the tab, so that the safety performance of the battery is improved.

**Table 3: Some characteristics and performance of negative electrode sheets in Examples 2 and 7 to 11**

| Group | Current collector thickness h µm | Reinforcing layer thickness H µm | H/h | Ceramic particles: binder: color developer | Tab deviation value | Tab folding ratio |
|---|---|---|---|---|---|---|
| Example 2 | 6 | 18 | 3 | 20: 75: 5 | 0.2 | <0.5% |
| Example 7 | 6 | 6 | 1 | 20: 75: 5 | 0.4 | 0.5% to 1% |
| Example 8 | 6 | 36 | 6 | 20: 75: 5 | 0.1 | <0.5% |
| Example 9 | 5.5 | 16.5 | 3 | 20: 75: 5 | 0.2 | <0.5% |
| Example 10 | 4.5 | 13.5 | 3 | 20: 75: 5 | 0.4 | <0.5% |
| Example 11 | 4 | 12 | 3 | 20: 75: 5 | 0.5 | 0.5% to 1% |

Referring to Table 3, by comparing Examples 2 and 7 to 8, it can be seen that when the thickness of the current collector is consistent, as the ratio of the reinforcing layer thickness to the current collector thickness increases, the tab deviation value and the tab fold ratio decrease, indicating that increasing the thickness of the reinforcing layer may reduce the wrinkles and folds of the tab, and as the ratio increases, the tab deviation value and the tab fold ratio tend to stabilize. In order to control costs, the ratio of the reinforcing layer thickness to the current collector thickness is controlled within the range of 1 to 6. By comparing Examples 2 and 9 to 11, it can be seen that when the ratio of the reinforcing layer thickness to the current collector thickness is consistent, as the thickness of the current collector decreases, the tab deviation value and the tab fold ratio increase, but overall remain within a relatively small range, indicating that as the thickness of the current collector decreases, the number of tab wrinkles and folds increases. The wrinkles and folds of the tab may be improved by arrangement of the reinforcing layer. Therefore, as the thickness of the current collector decreases, the ratio of the reinforcing layer thickness to the current collector thickness may be increased, so as to improve the wrinkles and folds of the tab.

In view of the foregoing, in the electrode sheet, the battery including the same, and the electronic device provided by the disclosure, by providing the reinforcing layer, the reinforcing layer may be enabled to provide an improved supporting effect when the width of the active material layer uncoated region is large, so that wrinkles, folds, and tab insertion in the active material layer uncoated region are avoided, and the reinforcing layer is prevented from occupying the region for welding on the active material layer uncoated region due to an excessively large width of the reinforcing layer. In this way, the size of the welding region of the active material layer uncoated region is ensured, and the safety performance of the battery is improved. By controlling the predetermined gap, edge bulging caused by the fusion of the reinforcing layer and the active material layer may be avoided, the tab welding region is ensured, and the wrinkles and folds of the tab are also reduced. In this way, battery performance is improved, and safety hazards are decreased. The disclosure may be applicable to thinner current collectors, and current collector wrinkling is reduced in the case of thinner current collectors or multi-layer tabs. By controlling the composition of the reinforcing layer, the negative electrode sheet production line may not require organic gas recovery equipment, so that the preparation process is simplified. By controlling the grayscale value of the reinforcing layer, laser reflection during laser cutting may be reduced, and for the same cut thickness, the laser power may be lowered, so that the laser energy for die-cutting is reduced, energy consumption is lowered, and foil leakage is decreased. In this way, the energy density and cycle performance of the battery are improved, the adhesion between the reinforcing layer and the current collector is enhanced, and peeling of the reinforcing layer is reduced. Through the arrangement of the reinforcing rib, the strength of the reinforcing layer may be improved and tab wrinkles may be reduced, so that the width of the active material layer uncoated region is increased, so as to accommodate more layers of tabs and reducing the direct current resistance of the battery.

## Claims

1. An electrode sheet (100), comprising a current collector (110), an active material layer (120), and a reinforcing layer (130),
wherein at least one surface of the current collector (110) comprises an active material layer coated region (101) and an active material layer uncoated region (102) adjacent to each other in a first direction (Y),
wherein the active material layer (120) is coated on the active material layer coated region (101), the reinforcing layer (130) is coated on at least a portion of the active material layer uncoated region (102), in the first direction (Y), a width of the active material layer uncoated region (102) is W1 mm, and a width of the reinforcing layer (130) is W2 mm, satisfying 2.5≤W1/W2≤7.5.

2. The electrode sheet (100) according to claim 1, wherein in the first direction (Y), a predetermined gap G mm is provided between the active material layer (120) and the reinforcing layer (130), satisfying 22≤W1/G≤400.

3. The electrode sheet (100) according to claim 2, wherein the predetermined gap is 0.1 mm to 1.1 mm.

4. The electrode sheet (100) according to claim 1, wherein in the first direction (Y), a width of the active material layer (120) is W3 mm, satisfying 3≤W3/W1≤11.

5. The electrode sheet (100) according to claim 1, wherein a ratio of a thickness of the reinforcing layer (130) to a thickness of the current collector (110) is 1 to 6, or
the thickness of the current collector (110) is 4 µm to 5.5 µm.

6. The electrode sheet (100) according to claim 1, wherein a grayscale value of the reinforcing layer (130) is 0 to 110.

7. The electrode sheet (100) according to claim 1, wherein the electrode sheet (100) further comprises a tab (140) and a portion of the active material layer (120) partially covers at least a portion of a surface of the tab (140) in the first direction (Y), or a transition region (160) is provided between the tab (140) and the active material layer coated region (101), and the reinforcing layer (130) is located on a portion of the transition region (160) and a portion of the surface of the tab (140).

8. The electrode sheet (100) according to claim 7, wherein the tab (140) further comprises a plurality of reinforcing ribs (150), the reinforcing ribs (150) are formed by stamping the tab (140) and are set in at least one of dot-shaped, strip-shaped, wave-shaped, or zigzag-shaped, and a ratio of a width of a maximum overlapping position of the reinforcing ribs (150) and the reinforcing layer (130) to the width of the reinforcing layer (130) is 0.1 to 1.

9. The electrode sheet (100) according to claim 1, wherein the current collector (110) is arranged on two surfaces of the active material layer (120), and the electrode sheet (100) is a negative electrode sheet.

10. A battery, comprising:
a housing (10) having an upper opening;
an electrode assembly (20) placed into the housing (10) through the upper opening; and
a lid assembly (11) closing the upper opening,
wherein the electrode assembly (20) is formed by winding or stacking after laminating a positive electrode sheet (200), a separator (300), and a negative electrode sheet, and the negative electrode sheet adopts the electrode sheet (100) according to any one of claims 1-9, in the first direction (Y), the electrode assembly (20) comprises a base (1) and an active material layer uncoated region (102), the active material layer uncoated region (102) comprises a bent portion (112) and a connecting portion (111) fixedly connected to the lid assembly (11), the bent portion (112) is connected between the base (1) and the connecting portion (111), and the reinforcing layer (130) covers the bent portion (112).

11. The battery according to claim 10, wherein the battery further comprises an adhesive tape (30) comprising a first adhesive region (31), a second adhesive region (33), and a non-adhesive region (32) located between the first adhesive region (31) and the second adhesive region (33), the non-adhesive region (32) covers the reinforcing layer (130), the first adhesive region (31) covers the base (1), and the second adhesive region (33) covers the connecting portion (111).

12. An electronic device, comprising the battery according to any one of claims 10-11.
